# EUROPÄISCHE PATENTSCHRIFT

(11) **EP 1 993 886 B1**
(45) Veröffentlichungstag und Bekanntmachung des Hinweises auf die Patenterteilung: **17.10.2012**
(21) Anmeldenummer: 07703867.7
(22) Anmeldetag: 15.01.2007
(51) Int. Cl.: B60S 1/38

(54) **WISCHBLATT**
WIPER BLADE
BALAI D'ESSUIE-GLACE

(30) Priorität: 02.03.2006 DE 102006009653
(43) Veröffentlichungstag der Anmeldung: 26.11.2008
(73) Patentinhaber: Robert Bosch GmbH, 70442 Stuttgart (DE)
(72) Erfinder: ENDRES, Wolfgang, 3300B Tienen (BE); LAY, Reiner, 52072 Achen (DE); PIRONNET, Marc, 3300 Hakendover (Tienen) (BE)
(86) Internationale Anmeldenummer: PCT/EP2007/050351
(87) Internationale Veröffentlichungsnummer: WO 2007/098982

(56) Entgegenhaltungen:
- EP-A- 1 666 165
- WO-A-03/080717
- JP-A- 3 042 355
- US-A- 5 349 718
- US-A- 5 762 698

## Beschreibung

### Stand der Technik

Die Erfindung betrifft ein Wischblatt, insbesondere für Scheibenwischer eines Kraftfahrzeugs, sowie ein Verfahren zur Bestimmung der Schichtdicke einer Beschichtung eines Wischblatts nach dem Oberbegriff der unabhängigen Ansprüche.

Damit sich Scheibenwischblätter der Kontur der Scheibe eines Kraftfahrzeugs möglichst gut anpassenund auch bei unterschiedlichen Temperaturen flexibel sind, werden Wischblätter in der Regel aus Elastomerprofilen gefertigt, wobei im Wesentlichen Gummimaterialien wie Naturkautschuk oder Synthesekautschuk wie z.B. Chloroprenkautschuk, Silikonkautschuk oder Polyurethankautschuk.

Ein gattungsgemäßes Wischblatt ist aus dem Dokument WO-A-03/080717 bekannt.

Elastomere weisen gegenüber Materialien wie Glas oder Kunststoff hohe Gleitreibungskoeffizienten auf, so dass bei einer festgelegten vertikalen Auflagekraft eines Elastomerprofils in Form eines Scheibenwischblattes auf der Oberfläche einer Glasscheibe häufig ein Vielfaches der Auflagekraft für eine Horizontalbewegung aufgewendet werden muss. Wird der Scheibenwischer bei Nässe betrieben, stellt dies kein wesentliches Problem dar, da durch den Wasserfilm auf der Scheibe ein dünner Schmierfilm zwischen dem Scheibenwischblatt und der Scheibe gebildet wird, so dass sich eine hydrodynamische Schmierung einstellt. Probleme treten jedoch auf, wenn das Scheibenwischblatt ohne Wasser als Schmierfilm betrieben wird, beispielsweise im Sommer oder nach kurzen Regenschauern. Unter derartigen Bedingungen erfolgt ein schnelles Abtrocknen der Scheibe, wodurch der Reibungskoeffizient stark ansteigt, was zu Quietschen, Rattern oder sogar Stillstand des Scheibenwischers führen kann.

Um den Reibungskoeffizienten von Scheibenwischblättern gegenüber einer trockenen Glasscheibe herabzusetzen, wird bisher häufig eine Chlorierung oder Bromierung der Oberfläche des Scheibenwischblattes, d.h. eine Härtung, durchgerührt. Dies erfordert jedoch eine sehr exakte Prozessführung und ist unter Umweltschutzaspekten nicht unproblematisch. Darüber hinaus kann durch derartige Behandlungsverfahren die Wischqualität negativ beeinflusst werden.

Des Weiteren wurde bereits vorgeschlagen, Elastomerprofile mit einer Beschichtung zu versehen, die insbesondere den Reibungskoeffizienten unter trockenen Bedingungen, d.h. den Trockenreibwert, herabsetzt. So ist z.B. bekannt, eine Wischerlippe mit einem Silikongummi zu beschichten, in das zur Reduzierung des Reibwertes als Trockenschmierstoff Molybdändisulfid eingebracht worden ist. Außerdem ist bekannt, ein Polyurethanlack als Binder einzusetzen, in den Graphitpulver eingelagert ist. Daneben ist ein einkomponentiger Polyurethanlack zur Beschichtung von Elastomeren bekannt, der reaktive Polysiloxane enthält. Ferner ist eine Beschichtung bekannt, die neben einem Polyurethan und einem Siloxan auch einen Zusatzstoff wie Ruß, Teflon, Graphit oder Talkum enthält. Mit diesem Material können Beschichtungen auf Elastomeren erzeugt werden, die einen niedrigen Reibungskoeffizienten unter trockenen Bedingungen aufweisen.

Da sich die bekannten reibungsvermindernden Beschichtungen aufgrund ihrer schwarzen oder schwarzgrauen Farbe nicht von dem Elastomerprofil des Wischblattes abheben, ist es bisher nicht möglich, visuell die Qualität der Beschichtung zu überprüfen. Fehler in der Beschichtung eines Wischblattes, z.B. Bereiche ohne Beschichtung oder mit zu geringer Beschichtung, können daher nicht eindeutig nachgewiesen werden. Die Überprüfung der Beschichtung hinsichtlich ihrer Verteilung auf dem Wischblatt ist zusätzlich dadurch erschwert, dass sich die bekannten reibungsvermindernden Beschichtungen und das Elastomerprofil des Wischblattes chemisch sehr ähnlich sind, da sie hauptsächlich aus den chemischen Elementen Kohlenstoff und Wasserstoff bestehen.

Aus US 5 349 718 ist bereits bekannt, ein Wischblatt mit einer Beschichtung zu versehen, welche im Gebrauch des Wischblatts unter Einwirkung der atmosphärischen UV-Strahlung allmählich ihre Farbe verändert. Die allmähliche Farbänderung soll die Lebensdauer des Wischblatts anzeigen und dem Nutzer des Wischblatts die Notwendigkeit, das Wischblatt auszutauschen, anzeigen.

Eine derartige Beschichtung ist nicht geeignet, Fehler in der Beschichtung, z.B. eines Gleitlacks, zu detektieren, da sie als separate Schicht auf das Wischblatt aufgetragen wird und die Farbänderung außerdem nur allmählich erfolgt.

### Offenbarung der Erfindung

Gegenstand der Erfindung ist ein Wischblatt mit den Merkinalen des Anspruchs 1. Das erfindungsgemäße Wischblatt hat den Vorteil, dass die Schichtdicke der Beschichtung des Wischblatts bestimmbar ist. Dies geschieht dadurch, dass das Wischblatt zumindest teilweise mindestens eine Beschichtung aufweist, welche zumindest eine Indikatorkomponente zur Bestimmung der Schichtdicke der Beschichtung enthält. Bei der Beschichtung handelt es sich um eine reibungsvermindernde Beschichtung, um eine Gleitlackbeschichtung. Im Rahmen der vorliegenden Erfindung wird unter einer Indikatorkomponente eine Komponente verstanden, deren Anteil in der Beschichtung wesentlich geringer ist als alle übrigen Komponenten der Beschichtung. Der Anteil der Indikatorkomponente beträgt bevorzugt maximal 3 Gew.%, besonders bevorzugt 0,1 bis 2,0 Gew.%. Unter einer Indikatorkomponente wird weiterhin verstanden, dass sie keinen oder allenfalls einen vernachlässigbaren Einfluss auf die tribologischen, physikalischen, chemischen und anderen Eigenschaften der Beschichtung hat. Insbesondere verhält sich die Indikatorkomponente gegenüber der Beschichtung und dem Wischblatt chemisch inert. Schließlich zeichnet sich eine Indikatorkomponente im Rahmen der vorliegenden Erfindung dadurch aus, dass ihr Anteil an der Beschichtung, und damit die Schichtdicke der Beschichtung, zerstörungsfrei messbar ist.

Der Erfindung liegt die Idee zugrunde, dass einer Beschichtung eines Wischblatts eine zusätzliche Komponente in geringer Menge hinzugefügt wird, die als Indikator für die Schichtdicke der Beschichtung dient. Indem die Indikatorkomponente im Wesentlichen homogen in der Beschichtung verteilt ist, ist der Anteil der Komponente in der Beschichtung proportional zur deren Schichtdicke. Durch die Bestimmung des Anteils der Indikatorkomponente kann daher die Schichtdicke ermittelt werden.

Die Erfindung ermöglicht es, Fehler in der Beschichtung, wie unbeschichtete Bereiche oder Bereiche mit zu geringer Schichtdicke oder mit abgeplatzter Beschichtung, eines Wischblatts zu detektieren. Ebenso kann mit Hilfe der Indikatorkomponente die Abnutzung der Beschichtung durch den Gebrauch des Wischblatttes untersucht werden.

Die Herstellung der Beschichtung, die eine Indikatorkomponente enthält, kann nach dem gleichen oder einem ähnlichen Verfahren erfolgen wie die Herstellung der Beschichtung ohne eine Indikatorkomponente. Ebenso kann das Aufbringen der Beschichtung auf das Wischblatt nach dem gleichen oder einem ähnlichen Verfahren erfolgen wie das Aufbringen einer Beschichtung ohne Indikatorkomponente. Hierin liegt ein weiterer Vorteil des erfindungsgemäßen Wischblatts, da das Herstellverfahren der Beschichtung und das Verfahren zumAufbringen der Beschichtung nicht geändert werden muss. Es ist lediglich erforderlich, der Beschichtung bei ihrer Herstellung eine Indikatorkomponente hinzuzufügen.

Da der Anteil der Indikatorkomponente insbesondere zerstörungsfrei messbar ist, kann das Wischblatt nach Bestimmung der Schichtdicke der Beschichtung seiner üblichen Verwendung in einer Scheibenwischanlage, z.B. eines Kraftfahrzeugs, ohne Beeinträchtigung der Wischqualität zugeführt werden. Dies hat den Vorteil, dass die Bestimmung der Schichtdicke nicht nur stichprobenartig an einzelnen Wischblättern, sondern an einer größeren Anzahl von Wischblättern vorgenommen werden kann. Die Bestimmung der Schichtdicke könnte möglicherweise für jedes einzelne Wischblatt erfolgen. So kann die Qualität der Beschichtung im Herstellungsprozess z.B. laufend kontrolliert werden.

In einer bevorzugten Ausführungsform ist die Indikatorkomponente eine fluoreszierende Komponente, insbesondere eine UV-fluoreszierende Komponente, oder eine Mischung verschiedener fluoreszierender Komponenten. Andere Indikatorkomponenten oder Markerkomponenten für die Schichtdicke sind ebenso möglich. So könnte beispielsweise eine schwach radioaktive Komponente eingesetzt werden, deren Strahlung proportional zu der in der Beschichtung enthaltenden Menge ist. Es wäre auch möglich, strahlungslose Kohlenstoff-Isotope, wie z.B. C13, als Indikatorkomponente einzusetzen, die mittels C13-NMR detektiert werden können. Eine fluoreszierende Indikatorkomponente hat jedoch den Vorteil, dass nicht nur die Indikatorkomponente selbst verhältnismäßig günstig ist, sondern auch seine Bestimmungsmethode, die UV-Spektroskopie, verhältnismäßig günstig und mit geringem Aufwand durchführbar ist.

Die fluoreszierende Komponente kann eine anorganische oder organische Verbindung sein. Sie kann in fester Form, d.h. als Pigment, oder in flüssiger Form, d.h. als Farbstoff, vorliegen. Die fluoreszierende Komponente kann z.B. ein Autunit, Oxazin, Rhodamin, Carbocyanin, Uranin oder Fluorescein sein.

Enthält die Beschichtung eine fluoreszierende Komponente als Indikatorkomponente für die Schichtdicke, so wird zur Bestimmung der Schichtdicke die Beschichtung des Wischblatts mittels einer ultravioletten (UV) Strahlungsquelle mit ultravioletter Strahlung bestrahlt. Die fluoreszierende Komponente absorbiert die ultraviolette Strahlung und emittiert ein charakteristisches gelb-grünes Licht. Die Intensität der emittierten Fluoreszenz kann z.B. mit einem UV-Spektrometer gemessen und quantifiziert werden, wobei die Intensität der Fluoreszenz proportional zu der Menge der fluoreszierenden Komponente, und damit der Schichtdicke, ist.

Demnach besteht ein weiterer Gegenstand der Erfindung in einem Verfahren zur Bestimmung der Schichtdicke einer Beschichtung eines Wischblatts mit den Merkmalen des nebengeordneten Anspruchs.

Das erfindungsgemäße Verfahren zur Bestimmung der Schichtdicke einer Beschichtung eines Wischblatts umfasst die folgenden Schritte:
(a) Zumindest teilweise Beschichten eines Wischblatts mit einer Beschichtung, welche wenigstens eine fluoreszierende Komponente enthält
(b) Bestrahlen der Beschichtung des gemäß Schritt (a) beschichteten Wischblatts mit einer ultravioletten Strahlungsquelle
(c) Messung der Intensität der bei der Bestrahlung gemäß Schritt (b) emittierten Fluoreszenz
(d) Bestimmung der Schichtdicke der Beschichtung mit Hilfe der gemäß Schritt (c) gemessenen Intensität der Fluoreszenz.

Das Beschichten des Elastomerprofils eines Wischblatts (Schritt (a)) erfolgt beispielsweise mittels Besprühen, Bestreichen o.dgl. Die Beschichtung wird nach dem Auftragen ggf. unter Erwärmen getrocknet.

Die Bestrahlung der Beschichtung gemäß Schritt (b)) des erfindungsgemäßen Verfahrens kann mit einer herkömmlichen UV-Strahlungsquelle und mit der üblichen Intensität, wie sie für die Detektion fluoreszierender Komponten eingesetzt wird, erfolgen.

Die Messung der Intensität der Fluorszenz, die bei der Bestrahlung emittiert wird, kann mit einem herkömmlichen UV-Spekrtrometer vorgenommen werden (Schritt (c)).

Die Bestimmung der Schichtdicke der Beschichtung mit Hilfe der gemäß Schritt (c) gemessenen Intensität der Fluoreszenz unterliegt der bekannten Gesetzmäßigkeit, wonach der Anteil der fluoreszierenden Komponente, und damit die Schichtdicke, proportional zur Intensität der Fluoreszenz ist.

Bei der Beschichtung des erfindungsgemäßen Wischblatts handelt es sich insbesondere um eine reibungsvermindernde Beschichtung, vorzugsweise einen Gleitlack. Die reibungsvermindernde Beschichtung kann unmittelbar auf das Wischblatt aufgebracht sein oder als eine von mehreren verschiedenen Beschichtungen vorgesehen sein. Sie kann ferner in einer oder mehreren Schichten aufgebracht sein. Die Schichtdicke der reibungsvermindernden Beschichtung liegt vorzugsweise im Bereich von 2 bis 20 µm.

Der Gleitlack enthält wenigstens einen Trockenschmierstoff, insbesondere Graphit, Polytetrafluorethylen, Polypropylen, Polyethylen, Molybdändisulfid, ein Bindemittel, insbesondere Polyacrylat, Polyurethan, Melaminharz, sowie ein Lösungsmittel, insbesondere Wasser und/oder ein oder mehrere organische Lösungsmittel.

Bei dem Gleitlack handelt es sich insbesondere um ein Polyurethansystem, dem gegebenenfalls eine zweite, reaktive Isocyanatgruppen enthaltende Komponente zugegeben wird. Die Isocyanatgruppen der zweiten Komponente bewirken eine nachträgliche, chemische Vernetzung des Bindemittels, so dass sie einen reibwertsenkenden, in das Polymer integrierten Bestandteil bilden. Der Gleitlack liegt bevorzugt als wässriger Einkomponentenlack oder aber als Zweikomponentenlack vor.

Als Trockenschmierstoff ist besonders Gaphit geeignet. Weiterhin ist die Zugabe von Polypropylenpulver oder von pulverförmigem Polytetrafluorethylen oder Molybdändisulfid von Vorteil. Weiterhin können auch zwei oder mehr der genannten Trockenschmierstoffe dem Gleitlack zugesetzt werden, eventuell auch in Kombination mit einem Polyamidpulver,Polyethylenpulver und/oder einer Lösung eines Polyamids. Als besonders vorteilhaft haben sich Mischungen von Graphit mit einem weiteren Trockenschmierstoff herausgestellt. So eignet sich insbesondere Graphit in Kombination mit Polytetrafluorethylen, Polyamid , Polypropylen, Polyethylen oder Molybdändisulfid. Derartig.modifizierte Gleitlacke führen zu sehr gut haftenden Beschichtungen auf Wischblättern mit besonders niedrigen Trockenreibwerten von maximal 1,5, teilweise unter 1,0, die gleichzeitig abrieb- und witterungsbeständig sind.

Der in dem Gleitlack vorgesehene Trockenschmierstoff weist bevorzugt eine Teilchengröße von maximal 20 µm, idealerweise weniger als 10 µm auf, wodurch ein weitgehend schlierenfreies Wischbild des Wischblatts gewährleistet ist.

Der Gleitlack mit einem Polyurethan, gegebenenfalls einem Härter und dem als Trockenschmierstoff zugesetzten Graphitpulver wird in Form einer dünnen Beschichtung auf das Elastomerprofil aufgebracht und für 10 min bei einer Temperatur von 120°C getrocknet.

Als Gleitlack eignet sich beispielsweise ein Gleitlack wie er in WO 03/106575 A beschrieben ist.

Die fluoreszierende Komponente hat keinen negativen Einfluss auf die Funktion des Gleitlacks wie Haftung, Reibwert und Reibwertminderung sowie auf das Verschleißverhalten.

### Ausführungsbeispiel

Geeignete Gleitlacksysteme bestehen aus ca. 10 Gew% Feingraphit, ca. 4-8 Gew% einer wässrigen Binderdispersion (z.B. Polyarcylat oder Polyurethan), ca. 10-15 Gew% organisches Lösemittel (z.B. Buthoxyethanol), ca. 0,5 Gew% der Indikatorkomponente (Uranin AP oder Fluorescein) und ca. 70 Gew% Wasser. Die Herstellung des Gleitlackes erfolgt in einem geeigenten Dissolver unter mäßigem Rühren.

Die Gleitlackbeschichtung wurde mit einer UV-Lampe der Wellenlänge 254 nm und 360 nm bestrahlt. Die Wellenlänge 254 nm eignet sich besonders gut, da sich die Fluoreszenz besonders intensiv von einem unbeschichteten oder weniger stark beschichteten Substrat (Wischblatt) abhebt.

Die Fluoreszenz wurde mit Hilfe eines handelsüblichen UV-Spektrometers in Reflektion gemessen und quantifiziert. Daraus wurde nach den bekannten Gesetzmäßigkeiten die Schichtdicke bestimmt.

## Patentansprüche

1. Wischblatt, insbesondere für Scheibenwischer, welches zumindest teilweise mit mindestens einer Beschichtung versehen ist, **dadurch gekennzeichnet, dass** die Beschichtung zumindest eine Indikatorkomponente zur Bestimmung der Schichtdicke der Beschichtung enthält, wobei die Beschichtung eine reibungsvermindernde Beschichtung in Form eines Gleitlacks ist.

2. Wischblatt nach Anspruch 1, **dadurch gekennzeichnet, dass** der Anteil der Indikatorkomponente in der Beschichtung zerstörungsfrei messbar ist.

3. Wischblatt nach einem der Ansprüche 1 oder 2, **dadurch gekennzeichnet, dass** der Anteil der Indikatorkomponente an der Beschichtung maximal 3 Gew.%, bevorzugt 0,1 bis 2,0 Gew.%, beträgt.

4. Wischblatt nach einem der vorhergehenden Ansprüche, **dadurch gekennzeichnet, dass** die Indikatorkomponente eine UV-fluoreszierende Komponente ist.

5. Wischblatt nach Anspruch 4, **dadurch gekennzeichnet, dass** die fluoreszierende Komponente eine anorganische oder organische Verbindung ist.

6. Wischblatt nach einem der Ansprüche 4 oder 5, **dadurch gekennzeichnet, dass** die fluoreszierende Komponente ein Autunit, Oxazin, Rhodamin, Carbocyanin, Uranin oder Fluorescein ist.

7. Wischblatt nach Anspruch 6, **dadurch gekennzeichnet, dass** der Gleitlack mindestens einen Trockenschmierstoff, insbesondere Graphit, Polytetrafluorethylen, Polypropylen, Polyethylen, Molybdändisulfid, enthält.

8. Wischblatt nach einem der Ansprüche 6 oder 7, **dadurch gekennzeichnet, dass** der Gleitlack ein Bindemittel, insbesondere Polyacrylat, Polyurethan, Melaminharz, enthält.

9. Verfahren zur Bestimmung der Schichtdicke einer Beschichtung eines Wischblatts gemäß einem der Ansprüche 1-9, umfassend die folgenden Schritte:
(a) Zumindest teilweise Beschichten eines Wischblatts mit einer Beschichtung, welche wenigstens eine fluoreszierende Komponente enthält, wobei die Beschichtung eine reibungsvermindernde Beschichtung in Form eines Gleitlack ist.
(b) Bestrahlen der Beschichtung des gemäß Schritt (a) beschichteten Wischblatts mit einer ultravioletten Strahlungsquelle
(c) Messung der Intensität der bei der Bestrahlung gemäß Schritt (b) emittierten Fluoreszenz
(d) Bestimmung der Schichtdicke der Beschichtung mit Hilfe der gemäß Schritt (c) gemessenen Intensität der Fluoreszenz.

## Claims

1. Wiper blade, in particular for windscreen wipers, which are at least partly provided with at least one coating, **characterized in that** the coating contains at least one indicator component for determining the layer thickness of the coating, the coating being a friction-reducing coating in the form of an antifriction lacquer.

2. Wiper blade according to Claim 1, **characterized in that** the proportion of the indicator component in the coating can be measured by a nondestructive method.

3. Wiper blade according to either of Claims 1 and 2, **characterized in that** the proportion of the indicator component, based on the coating, is not more than 3% by weight, preferably from 0.1 to 2.0% by weight.

4. Wiper blade according to any of the preceding Claims, **characterized in that** the indicator component is a UV-fluorescent component.

5. Wiper blade according to Claim 4, **characterized in that** the fluorescent component is an inorganic or organic compound.

6. Wiper blade according to either of Claims 4 and 5, **characterized in that** the fluorescent component is an autunite, oxazine, rhodamine, carbocyanine, uranin or fluorescein.

7. Wiper blade according to Claim 6, **characterized in that** the antifriction lacquer contains at least one dry lubricant, in particular graphite, polytetrafluoroethylene, polypropylene, polyethylene or molybdenum disulfide.

8. Wiper blade according to either of Claims 6 and 7, **characterized in that** the antifriction lacquer contains a binder, in particular polyacrylate, polyurethane or melanine resin.

9. Method for determining the layer thickness of a coating of a wiper blade according to any of Claims 1-8, comprising the following steps:
(a) at least partial coating of a wiper blade with a coating which contains at least one fluorescent component, the coating being a friction-reducing coating in the form of an antifriction lacquer
(b) irradiation of the coating of the wiper blade coated according to step (a) by means of an ultraviolet radiation source
(c) measurement of the intensity of the fluorescence emitted on irradiation according to step (b)
(d) determination of the layer thickness of the coating with the aid of the fluorescence intensity measured according to step (c).

## Revendications

1. Lame de balai, en particulier pour essuie-glace, qui est dotée au moins en partie d'au moins un revêtement,
**caractérisée en ce que**
le revêtement contient au moins un composant indicateur qui détermine l'épaisseur de la couche de revêtement, le revêtement étant un revêtement abaissant le frottement qui présente la forme d'un vernis glissant.

2. Lame de balai selon la revendication 1, **caractérisée en ce que** la teneur en composant indicateur du revêtement peut être mesurée de manière non destructive.

3. Lame de balai selon l'une des revendications 1 ou 2, **caractérisée en ce que** la teneur en composant indicateur sur le revêtement est d'au plus 3 % en poids et de préférence est comprise entre 0,1 et 2,0 % en poids.

4. Lame de balai selon l'une des revendications précédentes, **caractérisée en ce que** le composant indicateur est un composant fluorescent sous UV.

5. Lame de balai selon la revendication 4, **caractérisée en ce que** le composant fluorescent est un composant minéral ou un composant organique.

6. Lame de balai selon l'une des revendications 4 ou 5, **caractérisée en ce que** le composant fluorescent est une autunite, une oxazine, une rhodamine, une carbocyanine, une uranine ou une fluorescéine.

7. Lame de balai selon la revendication 6, **caractérisée en ce que** le vernis glissant contient au moins un lubrifiant à sec, en particulier du graphite, du polytétrafluoroéthylène, du polypropylène, du polyéthylène ou du disulfure de molybdène.

8. Lame de balai selon l'une des revendications 6 ou 7, **caractérisée en ce que** le vernis glissant contient un liant, en particulier un polyacrylate, un polyuréthane ou une résine de mélamine.

9. Procédé de détermination de l'épaisseur de la couche d'un revêtement d'une lame de balai selon l'une des revendications 1 à 8, le procédé comportant les étapes suivantes :
(a) revêtir au moins partiellement une lame de balai par un revêtement qui contient au moins un composant fluorescent, le revêtement étant un revêtement diminuant le frottement qui présente la forme d'un vernis glissant,
(b) irradier le revêtement de la lame de balai revêtue selon l'étape (a) par une source de rayonnement ultraviolet,
(c) mesurer l'intensité de la fluorescence émise lors de l'irradiation de l'étape (b) et
(d) déterminer l'épaisseur de la couche de revêtement à l'aide de l'intensité de la fluorescence mesurée à l'étape (c).
